**Europäisches Patentamt**

**European Patent Office**

**Office européen des brevets**

(19)

(11) Numéro de publication : **0 174 215 B1**

(12) **FASCICULE DE BREVET EUROPÉEN**

(45) Date de publication du fascicule du brevet :
26.04.89

(51) Int. Cl.⁴ : **G 02 B   6/44**

(21) Numéro de dépôt : **85401060.0**

(22) Date de dépôt : **29.05.85**

(54) **Dispositif de distribution de fibres optiques.**

(30) Priorité : **30.05.84 FR 8408533**

(43) Date de publication de la demande :
**12.03.86 Bulletin 86/11**

(45) Mention de la délivrance du brevet :
**26.04.89 Bulletin 89/17**

(84) Etats contractants désignés :
**BE CH DE GB IT LI NL SE**

(56) Documents cités :
**EP—A— 0 003 930**
**EP—A— 0 113 973**
**GB—A— 2 022 644**

(73) Titulaire : **SOCIETE ANONYME DE TELECOMMUNI-CATIONS**
**41, rue Cantagrel**
**F-75624 Paris Cedex 13 (FR)**

**SOCIETE INDUSTRIELLE DE LIAISONS ELECTRI-QUES - SILEC**
**64bis, rue de Monceau**
**F-75008 Paris (FR)**

(72) Inventeur : **Missout, Bernard M.**
**41, rue Cantagrel**
**F-75631 Paris Cedex 13 (FR)**
Inventeur : **Michaux, Jean-Pierre**
**41, rue Cantagrel**
**F-75631 Paris Cedex 13 (FR)**
Inventeur : **Piova, Jean-Luc**
**41, rue Cantagrel**
**F-75631 Paris Cedex 13 (FR)**

(74) Mandataire : **Martinet & Lapoux**
**62, rue des Mathurins**
**F-75008 Paris (FR)**

Jouve, 18, rue St-Denis, 75001 Paris, France

**Description**

La présente invention concerne un dispositif de distribution de fibres optiques dans des rainures hélicoïdales d'un jonc, destiné à obtenir un câble à fibres optiques dans une ligne de câblage. Le jonc est tiré le long de la ligne de câblage et traverse notamment un support tournant de bobines débitrices de fibres optiques déroulées vers des guide-fibre du dispositif de distribution dans lequel les fibres sont logées dans les rainures du jonc avant enrubanage du jonc pour maintenir les fibres dans les rainures.

Plus particulièrement, l'invention a trait à un dispositif pour distribuer des fibres optiques dans des rainures hélicoïdales d'un jonc, comprenant un support tournant autour du jonc et comportant des conduits contenant chacun un guide-fibre creux recevant au moins une fibre optique, les guide-fibre étant disposés suivant des génératrices d'un cône coaxial au jonc et ayant des premières extrémités de sortie de fibres propres à s'engager dans les rainures du jonc respectivement.

Des dispositifs de distribution de fibres optiques de ce type sont décrits dans les documents de brevet FR-A-2 388 931, EP-A-0 003 930 et FR-A-2 527 830. Les guide-fibre sont sous la forme de tubes capillaires creux fixés dans le support de guide-fibre par collage notamment. Le diamètre interne des tubes est de l'ordre du diamètre d'une fibre optique. Les tubes sont souvent obstrués par de la poussière faisant obstacle au défilement des fibres optiques. Les premières extrémités des tubes capillaires sont relativement souples et recourbées afin de pénétrer tangentiellement dans les rainures du jonc. Les premières extrémités des tubes capillaires sont donc en permanence disposées sur un cercle ayant un diamètre inférieur au diamètre externe du jonc afin que le support de guide-fibre tourne autour du jonc en fonction du pas parfois variable des rainures hélicoïdales du jonc.

Lorsqu'un jonc est introduit manuellement dans la ligne de câblage avant toute opération de câblage proprement dite, les premières extrémités des tubes doivent être engagées avec précaution dans les rainures du jonc. Puis le jonc est tiré sur plusieurs mètres jusqu'à un enrouleur de câble à une extrémité de la ligne de câblage, après avoir traversé notamment une ou des rubaneuses. Le tirage manuel exige un effort important pour vaincre l'inertie du support de guide-fibre qui est entraîné en rotation suite à la translation du jonc. En outre, au cours de l'enfilement du jonc entre les premières extrémités des tubes guide-fibre et également pendant les opérations de câblage, les premières extrémités des tubes sont soumises à une flexion excessive dommageable pour les fibres et pour leur pénétration précise dans les rainures du jonc.

Par ailleurs, les fibres optiques déroulées des bobines débitrices doivent être complètement dégagées des guide-fibre lors de l'introduction du jonc. Ceci nécessite un nouveau repérage des fibres par rapport aux rainures du jonc.

La GB-A-2 022 644 et la EP-A-0 113 973, qui constitue un état de la technique selon l'article 54 (3) et (4) de la CBE, décrivent des dispositifs apportant une solution partielle à ces inconvénients. En effet, ces dispositifs comprennent des guide-fibre coulissables. Dans le dispositif selon la GB-A-2 022 644, les guide-fibre sont coulissables longitudinalement après desserrage de vis de blocage respectives. Toutefois dans ce dispositif, les guide-fibre ne sont coulissables qu'individuellement et une fibre optique n'est guidée que par une extrémité percée du guide-fibre correspondant constitué d'une pièce pleine. Dans le dispositif selon la EP-A-0 113 973, les guide-fibre sont sous la forme de tubes à l'intérieur desquels défilent les fibres optiques. Ces guide-fibre sont montés coulissables longitudinalement de manière totalement libre et peuvent ainsi coulisser par exemple sous l'effet d'irrégularités dans les rainures du jonc.

De plus, il est à noter que selon la technique antérieure, le dispositif de distribution n'est pas lié mécaniquement au support de bobines débitrices de fibre et est utilisé également pour asservir la vitesse de rotation du support de bobines au pas des rainures du jonc à travers des moyens de couplage optoélectronique. Le positionnement idéal des guide-fibre par rapport aux bobines débitrices n'est donc obtenu qu'en cours d'opération de câblage, et toute opération manuelle ou tout déphasage de vitesse entre le support de bobines et le support de guide-fibre entraîne des torsions et flexions indésirables des fibres.

La présente invention vise à remédier aux inconvénients précédents et particulièrement à permettre un désengagement simultané des premières extrémités de l'ensemble des guide-fibre par rapport aux rainures du jonc.

A cette fin, la présente invention concerne un dispositif pour distribuer des fibres optiques tel que défini dans la revendication 1.

Dans le dispositif selon l'invention, le support de guide-fibre et le jonc peuvent tourner relativement l'un par rapport à l'autre lorsque les premières extrémités des guide-fibre sont désengagées des rainures du jonc, notamment pour enfiler le jonc dans la ligne de câblage.

D'autres caractéristiques de l'invention sont énoncées dans les revendications dépendantes 2 à 13.

Les caractéristiques de l'invention apparaîtront plus clairement à la lecture de la description suivante en référence aux dessins annexés correspondants dans lesquels :

— la Fig. 1 est une vue longitudinale horizontale d'une portion d'une ligne de câblage de fibres optiques incluant un dispositif de distribution selon l'invention ;

— la Fig. 2 est une vue en perspective d'un tronçon de jonc à rainures hélicoïdales ayant trois filets colorés ;

— la Fig. 3 est une vue en coupe axiale d'un dispositif de distribution selon l'invention ;

— les Figs. 4 et 5 sont une vue de face arrière et une vue en coupe axiale d'un support de guide-fibre selon l'invention, respectivement ;

— la Fig. 6 est une vue en coupe axiale de côté d'un guide-fibre selon l'invention ;

— les Figs. 7 et 8 sont des vues longitudinales de dessous et en coupe axiale de côté détaillant une première extrémité à l'avant d'un guide-fibre, respectivement ;

— les Figs. 9A, 9B et 9C sont des sections transversales de la première extrémité du guide-fibre prises le long des lignes AA, BB et CC de la Fig. 8, respectivement ;

— la Fig. 10 est une vue de face arrière d'un flasque ayant des saignées radiales recevant des tenons arrière de guide-fibre et muni d'une étiquette de repérage de fibres ;

— les Figs. 11 et 12 sont une vue de face et une vue en coupe prise le long de la ligne DD de la Fig. 11 d'une clé plate pour fixation du flasque, respectivement ;

— les Figs. 13 et 14 sont des vues en coupe axiale et de dessus détaillant une seconde extrémité à l'arrière d'un guide-fibre, respectivement ; et

— la Fig. 15 est une section transversale de la seconde extrémité du guide-fibre prise le long de la ligne EE de la Fig. 13.

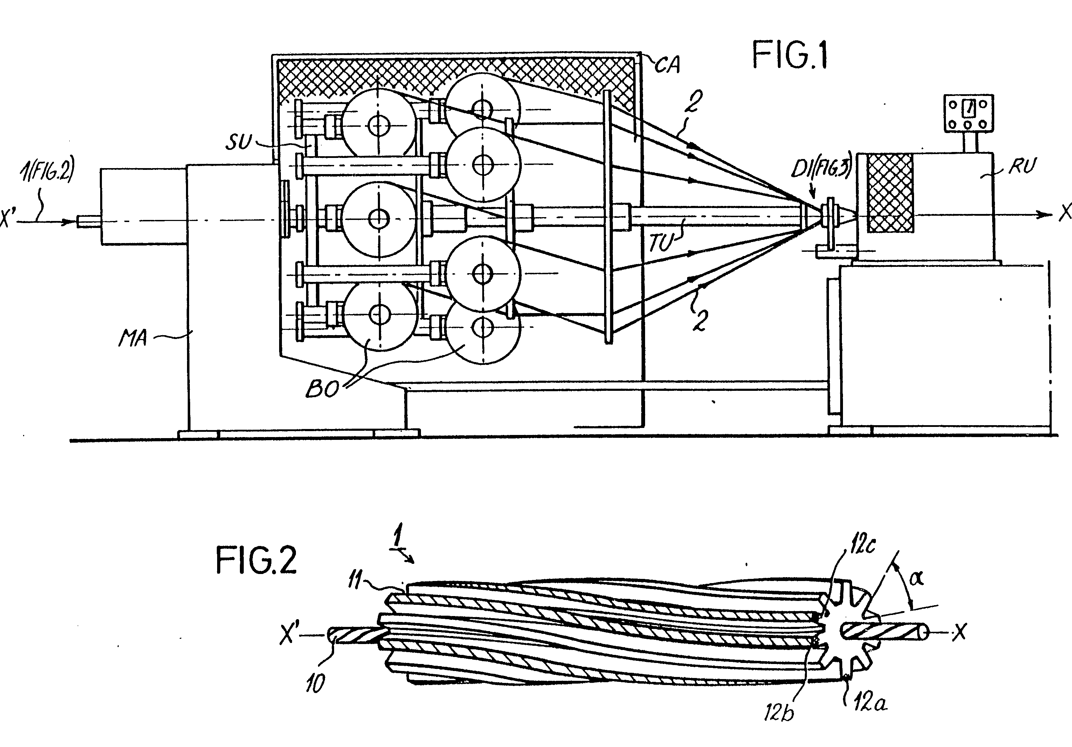

Comme montré schématiquement à la Fig. 1, un dispositif de distribution de fibres optiques DI est prévu entre un support SU de bobines débitrices de fibre BO et au moins une rubaneuse RU disposés le long d'un axe longitudinal X'X d'une ligne de câblage. Un jonc cylindrique rainuré 1 propre à former l'âme d'un câble à fibres optiques est tiré le long de l'axe X'X, de la gauche vers la droite dans la Fig. 1. Le support de bobines SU tourne autour de l'axe X'X dans une cage de protection CA. Le dispositif de distribution DI est lié mécaniquement en rotation au support de bobines SU par l'intermédiaire d'un tube TU traversé par le jonc 1. La vitesse de rotation du support SU et du dispositif de distribution DI est asservie à la vitesse de translation du jonc et plus précisément au pas variable des rainures hélicoïdales du jonc au moyen d'un mécanisme d'asservissement MA comprenant une bague à doigts engrenant dans des rainures du jonc. Des fibres optiques 2 déroulées à partir des bobines BO sont distribuées dans des rainures du jonc 1 au moyen du dispositif DI, puis maintenues librement dans les rainures par au moins une gaine de protection entourant le jonc et fermant les rainures, fournie par la rubaneuse RU.

Le jonc 1 a une structure cylindrique longiligne en matière thermoplastique extrudée qui, de préférence, enrobe une armature centrale 10 telle qu'un fil d'acier ou un toron de fils d'acier torsadés, ou autre, comme montré à la Fig. 2. Des rainures hélicoïdales parallèles 11 sont régulièrement réparties à la périphérie du jonc 1. Selon la réalisation illustrée, N = 10 rainures 11 sont prévues pour recevoir chacune au moins une fibre optique 2 déroulée à partir d'une bobine BO et introduite dans le jonc par le dispositif de distribution DI. Les rainures 11 peuvent suivre des tracés hélicoïdaux tantôt directs tantôt rétrogrades. Les rainures ont une section trapézoïdale ou en vé, ayant typiquement un angle au sommet $\alpha$ égal à 30°. Selon d'autres variantes, la section des rainures du jonc est semi-circulaire ou carrée.

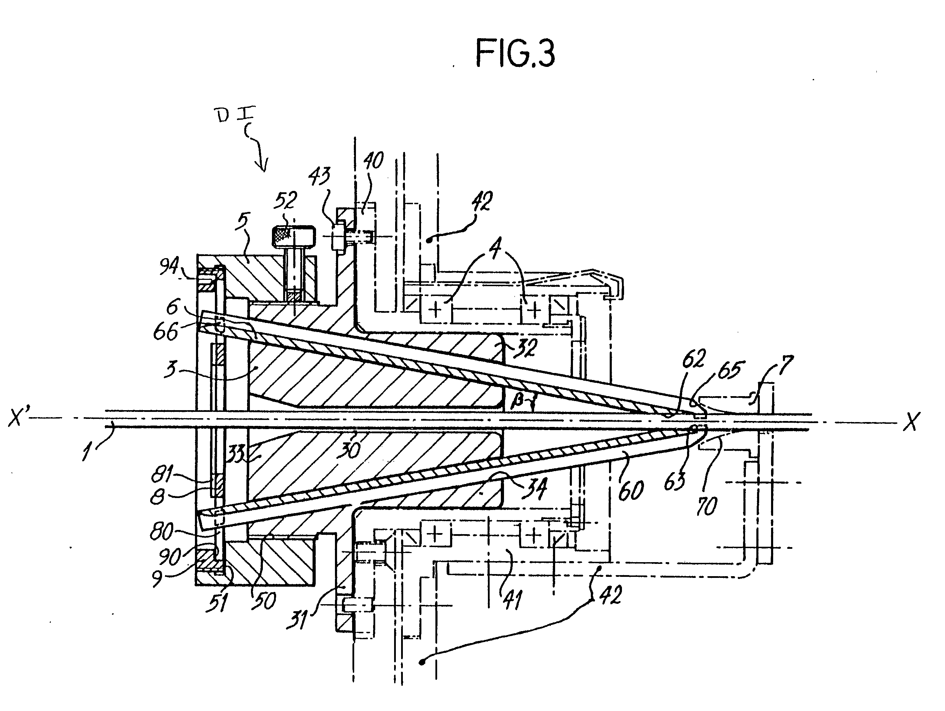

En se référant maintenant à la Fig. 3, un dispositif de distribution de fibres optiques DI selon l'invention comprend un support 3 de guide-fibre ayant une forme générale cylindrique autour de l'axe horizontal X'X. Un alésage cylindrique axial 30 du support 3 ayant des extrémités tronconiques est traversé librement par le jonc 1. Le support 3 présente de part et d'autre d'un collet 31, un tronçon cylindrique lisse avant 32 et un tronçon cylindrique fileté arrière 33. Le tronçon avant 32 est emmanché dans une bague intérieure 40 d'un double roulement à billes 4 formant palier, ayant une bague extérieure 41 fixée à un bâti fixe 42. Le collet 31 est fixé contre un épaulement arrière de la bague intérieure 40 par des vis 43. Le tronçon arrière 33 est destiné à recevoir un alésage taraudé 50 d'une bague moletée 5.

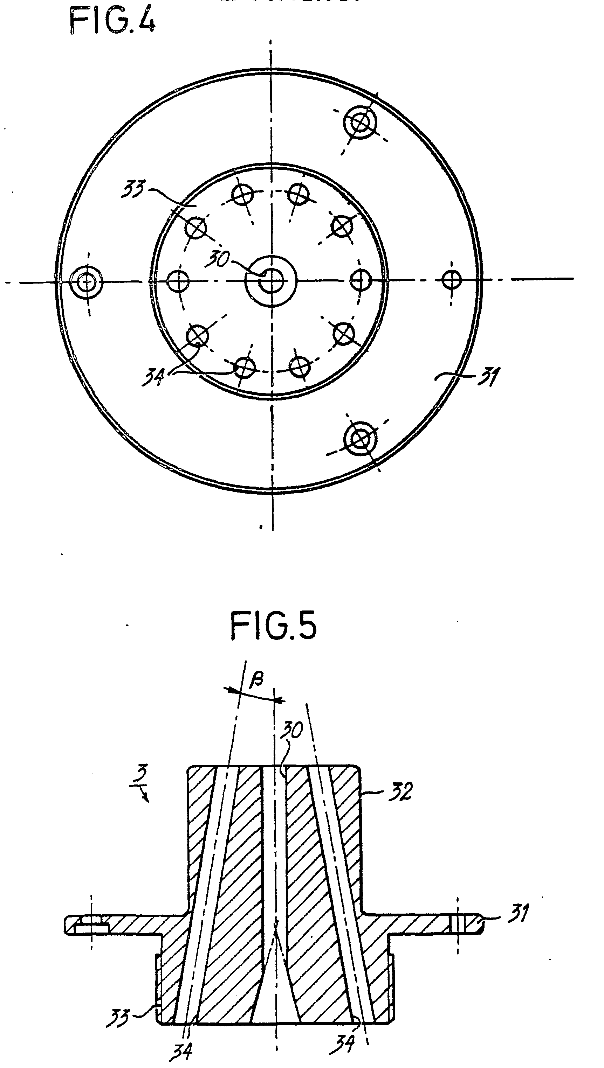

Comme montré aux Figs. 4 et 5, dans le support 3 sont également ménagés N conduits cylindriques rectilignes 34 coaxiaux à des génératrices d'un cône centré sur l'axe X'X, et donc coaxial au jonc 1, et ayant un demi-angle au sommet $\beta$ typiquement égal à 10°. Les conduits 34 sont équirépartis autour de l'axe X'X et convergent vers l'avant du support 3.

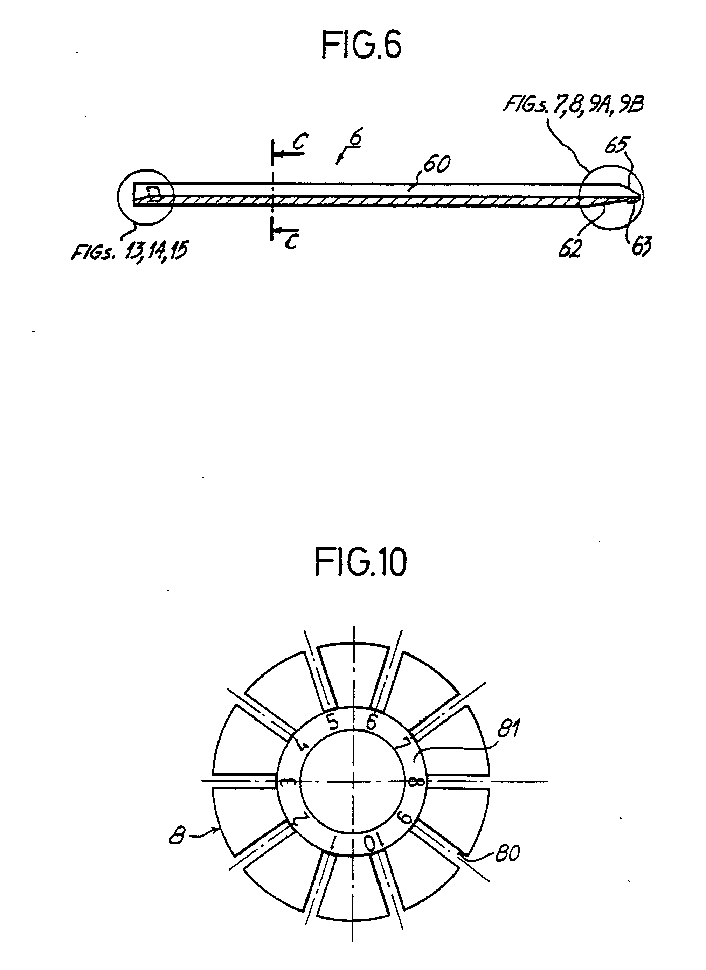

Dans chaque conduit 34 est monté à coulissement un guide-fibre 6 montré aux Figs. 6 à 9C. Le guide-fibre 6 est obtenu à partir d'un cylindre plein en acier inoxydable ayant un diamètre égal au diamètre des conduits 34, typiquement égal à 5 mm. Dans le guide-fibre 6 est pratiquée une rainure longitudinale 60 ayant une section nettement plus grande que la section de la fibre. Typiquement, au moins une dimension transversale, largeur ou hauteur de la section de la rainure est nettement supérieure au double du diamètre externe de gaine d'une fibre optique de l'ordre de 0,2 mm. Selon la réalisation illustrée, la section de la rainure 60 est une section en vé incluse dans un secteur circulaire typiquement de 45° environ. Les rainures 60 sont donc très larges par rapport au diamètre d'une fibre optique et ne peuvent être obstruées par de la poussière. Les sections des rainures 60 forment des têtes de flèches orientées vers l'axe X'X. Les rainures 60 sont donc ouvertes vers l'extérieur du cône, déjà cité, ce qui facilite l'introduction des fibres optiques dans les guide-fibre. La longueur des guide-fibre 6 est sensiblement égale au double de la longueur du support 3.

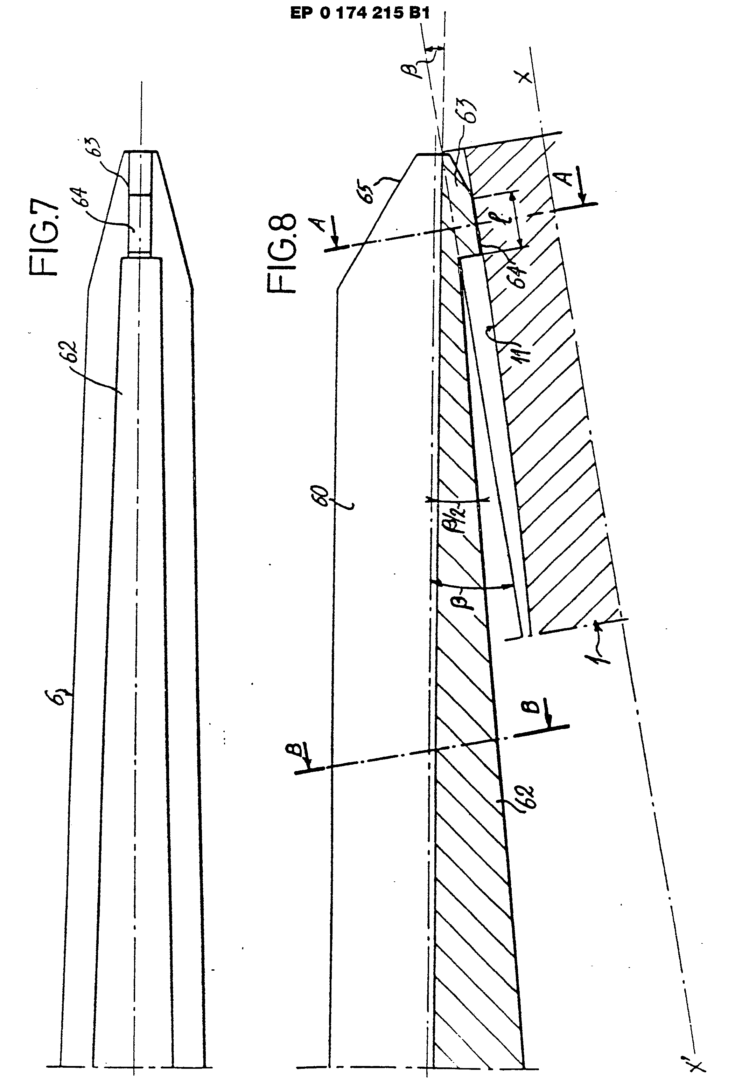

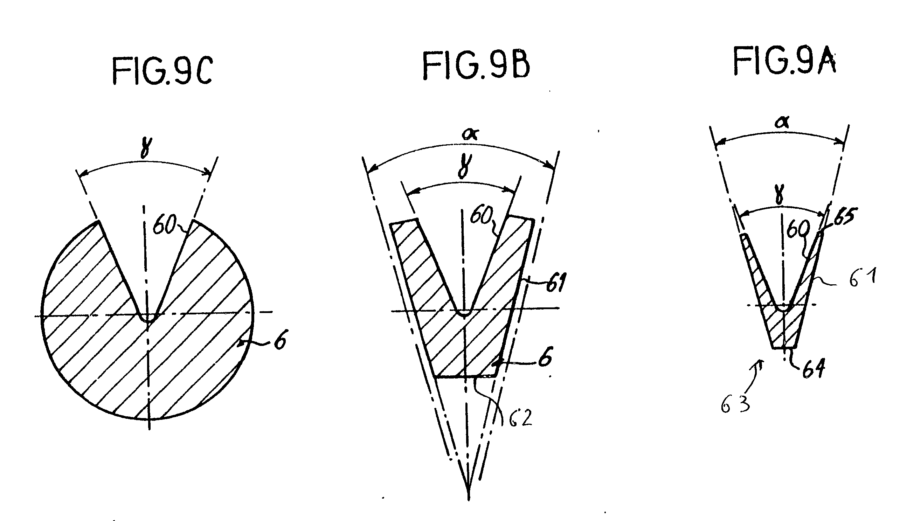

Comme montré aux Figs. 7, 8, 9A et 9B, chaque guide-fibre 6 est effilé vers l'avant aussi bien latéralement qu'au-dessus et au-dessous de la rainure en vé 60. Une extrémité avant du guide-fibre présente une section externe 61 ayant un profil similaire à celui des rainures 11 du jonc 1. Selon la réalisation illustrée, la section externe 61 est une section en vé épointé ayant un angle au sommet α égal à celui des rainures 11 du jonc 1 et plus petit que l'angle au sommet γ de la rainure 60 du guide-fibre. La section externe 61 du guide-fibre 6 et la section de la rainure 60 sont alignées suivant un plan de symétrie longitudinal du guide-fibre. Sous-jacent à l'avant de la rainure 60 et perpendiculaire au plan de symétrie est prévu un chanfrein 62 formant avec l'axe longitudinal du guide-fibre un angle inférieur à β, typiquement égal à β/2, terminé par un doigt longitudinal saillant 63. Le doigt 63 a une section longitudinale en trapèze rectangle et une hauteur sensiblement égale à celle des rainures 11 du jonc 1, comme montré à la Fig. 8. Le doigt 63 présente une section transversale épousant le profil en vé d'une rainure 11. Lorsque le guide-fibre 6 coulisse dans le conduit 34 du support 3 vers le jonc 1, un chant inférieur 64 du doigt 63 est parallèle à l'axe X'X et bute contre le fond de la rainure correspondante 11. Le fond de l'extrémité avant de la rainure 60 est alors à la périphérie du jonc. Seul le doigt 63 est au contact du jonc 1 sur une longueur ℓ très petite, de l'ordre de 3 mm, en raison du cheminement hélicoïdal de la rainure 11. De préférence, le doigt 63 forme avec l'axe X'X du jonc 1 un angle tel que la surface latérale du doigt soit tangente à la surface hélicoïdale de la rainure 11 ; en d'autres termes, le doigt 63 est sensiblement vrillé et suit parfaitement le tracé hélicoïdal de la rainure 11. Par ailleurs, le chanfrein 62 surplombe le jonc 1.

A l'opposé du doigt 63, l'extrémité avant du guide-fibre 6 est bisautée pour former un chanfrein sus-jacent 65 formant un angle de l'ordre de 30° avec l'axe du guide-fibre. Le chanfrein 65 est recouvert par une portion tronconique convexe arrière 70 d'un alésage d'une filière de révolution 7 fixée au bâti 42 et traversée librement par le jonc 1, comme montré à la Fig. 3. En variante, la filière 7 peut être montée tournante et solidaire du support 3 ou de la bague intérieure 40. La portion 70 rabat les fibres 2 sortant des rainures 60 des guide-fibre 6 dans les rainures 11 du jonc 1 respectivement.

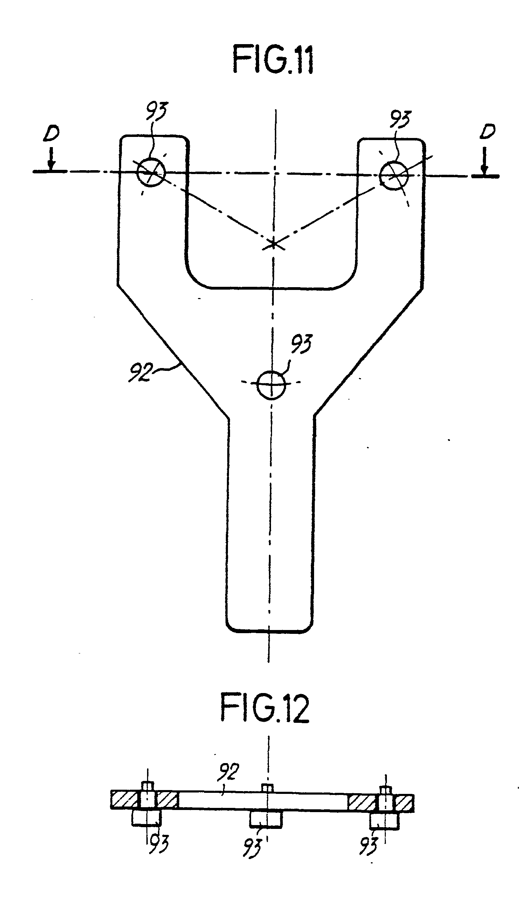

Des extrémités arrière des guide-fibre 6 sont maintenues stationnairement en translation suivant la direction de l'axe X'X de défilement du jonc 1 au moyen notamment d'un flasque mince 8 montré aux Figs. 3 et 10. Le flasque 8 est une rondelle ayant un pourtour maintenu axialement avec jeu dans une gorge circulaire formée entre une face interne 51 d'un lamage taraudé arrière de la bague moletée 5 et un lamage avant 90 d'un disque fileté 9, la bague 5 et le disque 9 assemblés formant un écrou à visser sur le tronçon 33 du support 3. Le disque 9 est vissé dans le lamage taraudé de la bague 5 au moyen d'une clé plate 92 montrée aux Figs. 11 et 12. La clé est pourvue de trois ergots 93 répartis aux sommets d'un triangle équilatéral pour coopérer avec trois trous borgnes 94 du disque 9, comme montré à la Fig. 3. Lorsque le disque 9 est vissé à fond dans la bague 5, le flasque 8 est maintenu avec jeu dans la gorge suivant la direction longitudinale X'X.

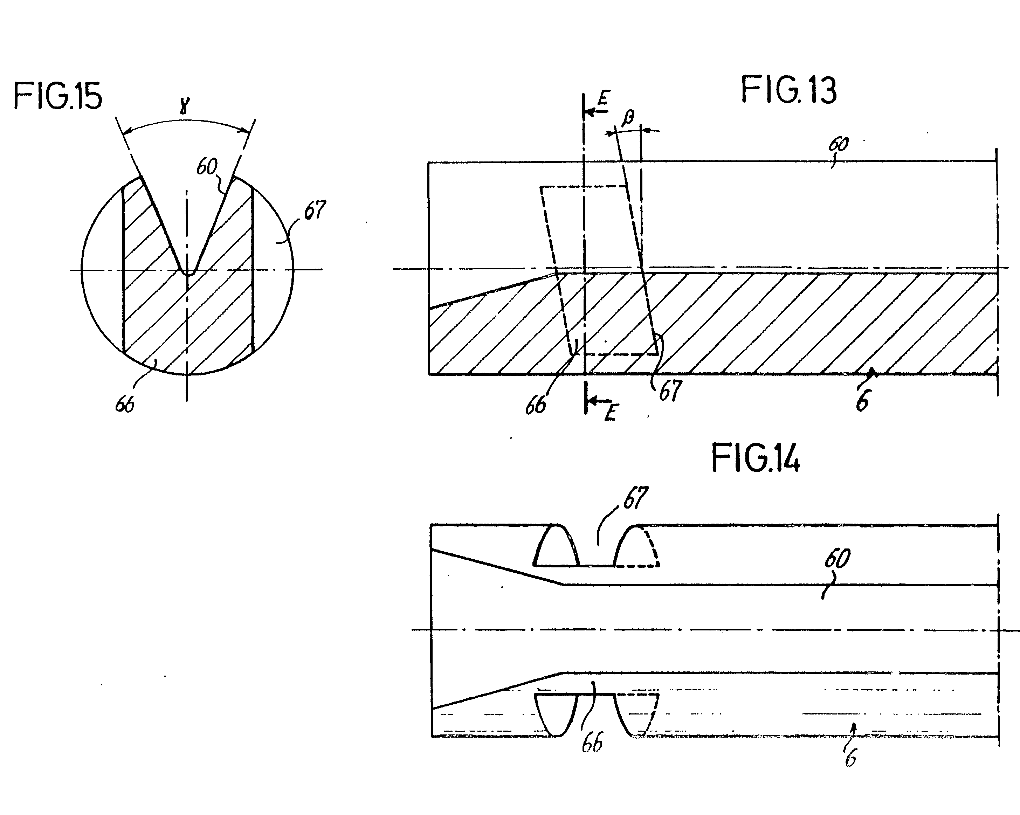

Le flasque 8 comporte N saignées radiales 80 équiréparties circulairement. Chaque saignée 80 reçoit un tenon complémentaire 66 formé à l'extrémité arrière d'un guide-fibre 6, sensiblement au niveau d'un évasement arrière de la rainure 60, comme montré aux Figs. 13, 14 et 15. Le tenon 66 possède deux parois parallèles de part et d'autre du plan de symétrie longitudinal de la rainure en vé 60, formant des fonds de deux encoches 67 ayant des parois latérales inclinées par rapport à une section diamétrale du guide-fibre avec l'angle β, comme montré à la Fig. 13. Les guide-fibre 6 sont solidaires du flasque 8 suivant la direction longitudinale X'X grâce aux encoches 67 encadrant les faces du flasque 8.

Lorsque le flasque 8 est translaté le long de l'axe X'X, les tenons 66 glissent radialement dans les saignées 80 et les guide-fibre 6 coulissent dans les conduits 34 suivant les génératrices du cône déjà mentionné. Une translation axiale du flasque 8 est obtenue soit au cours de l'assemblage des éléments constitutifs du dispositif de distribution, soit au cours d'opérations de réglage ou de maintenance de la ligne de câblage, au moyen du vissage de la bague 5 autour du tronçon fileté arrière 33 du support 3, le flasque 8 demeurant stationnaire en rotation. En particulier, préalablement à l'introduction du jonc rainuré 1 le long de l'axe X'X de la ligne de câblage et à la traversée libre du jonc à travers les alésages du support 3 et de la filière 7, la bague 5 est sensiblement dévissée pour reculer les guide-fibre 6 et écarter les doigts 63 qui ouvrent un passage circulaire plus grand qu'une section du jonc 1. Puis après l'introduction du jonc, la bague 5 est vissée autour du tronçon 33 jusqu'à ce que les doigts 63 pénètrent dans les rainures 11 du jonc respectivement. La bague 5 est maintenue à cette position par une vis de blocage radiale 52 butant contre le tronçon fileté 33. Les fibres 2 sont déroulées à partir des bobines débitrices BO, enfilées dans les rainures 60 des guide-fibre 6 et rabattues dans les rainures 11 du jonc 1 par l'alésage tronconique arrière 70 de la filière 7. Les extrémités des fibres sont collées dans les rainures du jonc. Le dispositif de distribution est alors prêt pour le câblage proprement dit. Le montage avec jeu du flasque 8 dans la gorge circulaire entre les lamages 51 et 90 permet la libre rotation de la bague taraudée 5 et permet ainsi aux guide-fibre 6 d'avancer et de reculer.

De préférence, comme déjà dit, le support 3 contenant les guide-fibre 6 est solidaire du support tournant SU sur lequel sont montées à rotation les bobines débitrices de fibre BO, par l'intermédiaire du tube TU (Fig. 1). En outre, le jonc rainuré 1 formant l'âme d'un câble à fibres optiques comporte des filets colorés de repérage entre rainures obtenus dans un dispositif de fabrication ayant une extrudeuse principale et au moins une extrudeuse auxiliaire tel que décrit dans la demande de brevet européen EP-A-0078213. Par exemple, comme montré à la Fig. 2, le jonc 1 comporte un premier filet coloré 12a, un troisième filet coloré 12b et un quatrième filet coloré 12c en tournant dans le sens des aiguilles d'une montre. Les filets 12a, 12b et 12c ont une couleur, par exemple jaune, différente de la couleur du jonc 1, par exemple rouge. L'attribution d'une raìnure 11 du jonc ainsi repérée à une bobine débitrice BO est facilitée par une étiquette de numéros 81 collée contre la face arrière du flasque 8, comme montré aux Figs. 3 et 10. N numéros, ici variant de 1 à 10, sont inscrits sur l'étiquette 81 et équirépartis circulairement sous les saignées 80 du flasque 8. En variante, les N numéros peuvent être gravés directement sur la face arrière du flasque 8.

Lorsque le jonc est enfilé le long de l'axe X'X, le support de bobines débitrices SU et le support 3 avec les doigts 63 des guide-fibre 6 en retrait du jonc 1 demeurent immobiles en rotation. Les filets colorés 12a, 12b et 12c sont ainsi positionnés entre des doigts repérés par des numéros prédéterminés sur l'étiquette 81. Le positionnement relatif précédent entre les guide-fibre, et donc les bobines débitrices de fibre BO, et les rainures 11 du jonc est conservé lorsque la bague 5 est vissée autour du tronçon 33, le flasque 8 avec l'étiquette 81 étant simplement translaté vers l'avant. Dans ces conditions, un tel repérage des fibres 2 dans les rainures 11 peut être réitéré d'une manière identique pour différents tronçons de jonc à câbler. En particulier, pour une liaison de transmission à fibres optiques nécessitant le raccordement de plusieurs tronçons de jonc, une même fibre optique véhicule le même signal optique. Dans le cas de dommage mécanique de l'une des fibres du câble, il est possible de repérer aisément les fibres et de comparer leurs caractéristiques, sachant que les tronçons de fibre dans une rainure donnée des divers tronçons de jonc proviennent d'une même bobine et donc de la même fibre fabriquée en continu.

**Revendications**

1. Dispositif (DI) pour distribuer des fibres optiques (2) dans des rainures hélicoïdales (11) d'un jonc (1) en défilement longitudinal, comprenant un support (3) monté tournant autour du jonc (1) et comportant des conduits rectilignes (34) traversés chacun par un guide-fibre longiligne (6) évidé longitudinalement pour recevoir au moins une fibre optique (2), les guide-fibre (6) étant disposés suivant des génératrices d'un cône coaxial au jonc et ayant des premières extrémités de sortie de fibre (63) propres à s'engager dans les rainures (11) respectives du jonc (1) en aval dudit support (3), caractérisé en ce que les guide-fibre (6) sont montés à coulissement dans les conduits (34) et en ce que le dispositif comprend des moyens (5, 8, 9) pour opérer la translation simultanée de l'ensemble des guide-fibre (6) le long des génératrices du cône respectivement, selon une amplitude suffisante pour engager, ou désengager complètement, l'ensemble desdites premières extrémités de ces guide-fibre dans les, ou hors des, rainures respectives du jonc.

2. Dispositif conforme à la revendication 1, caractérisé en ce que les moyens (5, 8, 9) pour opérer la translation simultanée de l'ensemble des guide-fibre comprennent une rondelle (8) montée dans une gorge annulaire (51, 90) ménagée dans la partie arrière d'un écrou (5, 9) vissé sur l'arrière du support tournant (3, 33), ladite rondelle (8) étant dotée de saignées radiales (80) dans lesquelles coulissent des secondes extrémités en forme de tenons (66) des guide-fibre (6) respectivement, de sorte que le vissage ou dévissage dudit écrou (8) occasionne la translation simultanée correspondante desdits guide-fibre (6).

3. Dispositif conforme à la revendication 2, caractérisé en ce que l'écrou (5, 9) est constitué par une bague taraudée (5) vissée par une partie avant autour d'un tronçon fileté (33) du support (3) et par un disque creux fileté (9) vissé dans un lamage taraudé (51) ménagé dans l'arrière de la bague (5) et plaquant avec jeu la rondelle (8) dans l'arrière de la bague (5).

4. Dispositif conforme à la revendication 2 ou 3, caractérisé en ce que l'écrou (5, 9) est bloqué sur le support (3) au moyen d'une vis à blocage radiale ou analogue (52).

5. Dispositif conforme à l'une quelconque des revendications 2 à 4, caractérisé en ce que des repères sont marqués en dessous des saignées (80) sur la rondelle (8) ou sur une étiquette circulaire (81) fixée contre la rondelle, respectivement.

6. Dispositif conforme à l'une quelconque des revendications 1 à 5, caractérisé en ce que chaque guide-fibre (6) comporte une rainure longitudinale (60) de préférence ayant une section analogue à une section d'une rainure (11) du jonc (1) et ouverte à l'opposé du jonc, pour recevoir au moins une fibre optique (2).

7. Dispositif conforme à la revendication 6, caractérisé en ce que la section des rainures (60) des guide-fibre (6) est nettement plus grande que la section des fibres optiques (2).

8. Dispositif conforme à la revendication 6 ou 7, caractérisé en ce que la section des rainures (60) des guide-fibre (6) est en vé et est incluse dans un secteur circulaire de préférence de 45° environ.

9. Dispositif conforme à l'une quelconque des revendications 6 à 8, caractérisé en ce qu'il comprend, dans la zone de convergence des premières extrémités des guide-fibre, un élément de révolution (7) ayant un alésage (70) de préférence tronconique traversé par le jonc (1), et recouvrant des bords-avant de préférence chanfreinés (65) des rainures (60) des guide-fibre (6) pour rabattre les fibres (2) dans les rainures (11) du jonc (1).

10. Dispositif conforme à l'une quelconque des revendications 1 à 9, caractérisé en ce que la première extrémité de chaque guide-fibre (6) comporte un doigt sous-jacent (63) épousant le profil d'une rainure (11) du jonc (1) et formant avec l'axe du guide-fibre (6) un angle égal au demi-angle au sommet (β) du cône.

11. Dispositif conforme à l'une quelconque des revendications 1 à 9, caractérisé en ce que la première extrémité de chaque guide-fibre (6) comporte un doigt sous-jacent (63) épousant le profil d'une rainure (11) du jonc (1) et formant avec l'axe (X'X) du jonc (1) un angle tel que la surface latérale de ce doigt soit tangente à la surface hélicoïdale de la rainure.

12. Dispositif conforme à l'une des revendications 6 à 9 et à la revendication 10 ou 11, caractérisé en ce que la première extrémité de chaque guide-fibre (6) comporte un chanfrein sous-jacent (62) précédant le doigt (63) et en retrait de celui-ci et surplombant le jonc (1) afin qu'une extrémité de la rainure (60) du guide-fibre (6) soit disposée à la périphérie du jonc (1).

13. Dispositif conforme à l'une quelconque des revendications 1 à 12, caractérisé en ce que le support tournant de guide-fibre (3) est lié rigidement à des moyens (SU) tournant autour du jonc (1) en fonction du pas des rainures (11) du jonc (1) et supportant des bobines débitrices de fibre (BO) déroulant des fibres (2) vers les guide-fibre (6).

**Claims**

1. Device (DI) for dispensing optical fibers (2) in helical grooves (11) of a ring (1) imparted with a longitudinal translatory motion, comprising a holder (3) mounted in rotation about the ring (1) and including straight conduits (34) each being crossed by an elongated fiber-guide (6) longitudinally hollowed for receiving at least one optical fiber (2), the optical fibers (6) being arranged along generating lines of a cone coaxial with the ring and having first fiber-output ends (63) designed to engage in the respective grooves (11) of the ring (1) downstream the holder (3), characterized in that the fiber-guides are slidably mounted in the conduits (34) and in that the device comprises means (5, 8, 9) for proceeding to the simultaneous translation of the entirety of the fiber-guides (6) along the cone generating lines respectively, with an amplitude sufficient for engaging, or disengaging completely, the entirety of said first ends of these fiber-guides in the, or from the, respective grooves in the ring.

2. Device according to claim 1, characterized in that the means (5, 8, 9) for proceeding to the simultaneous translation of the entirety of the fiber-guides comprise a washer (8) mounted in an annular groove (51, 90) made in the rear part of a nut (5, 9) screwed onto the rear of the rotating holder (3, 33), said washer (8) having radial slots (80) in which second tenon-shaped ends (66) of the fiber guides (6) slide respectively, so as the screwing or unscrewing of said nut (8) involves the corresponding simultaneous translation of said fiber-guides (6).

3. Device according to claim 2, characterized in that the nut (5, 9) is composed of a tapped sleeve (5) having a front part screwed around a threaded section (33) of the holder (3) and a threaded hollow disk (9) screwed into a tapped facing (51) made in the rear of the sleeve (5) and holding with play the washer (8) against the rear of the sleeve (5).

4. Device according to claim 2 or 3, characterized in that the nut (5, 9) is blocked on the holder (3) by means of radial blocking nut or analogous (52).

5. Device according to any one of claims 2 to 4, characterized in that markers are marked beneath the slots (80) on the washer (8) or on a circular label (81) affixed to the washer, respectively.

6. Device according to any one of claims 1 to 5, characterized in that each fiber-guide (6) has a longitudinal groove (60) preferably having a cross-section analogous with a cross-section of a groove (11) in the ring (1) and open opposite the ring, to receive at least one optical fiber (2).

7. Device according to claim 6, characterized in that the cross-section of the grooves (60) in the fiber-guides (6) is much greater than the cross-section of the optical fibers (2).

8. Device according to claim 6 or 7, characterized in that the cross-section of the grooves (60) in the fiber-guides (6) is V-shaped and is included in a circular sector preferably having an angle equal to 45° or thereabouts.

9. Device according to any one of claims 6 to 8, characterized in that it comprises, in the zone of convergence of the first fiber-guide ends, a revolution member (7) having a bore (70) preferably truncated being crossed by the ring (1), and overlaping front edges preferably chamfered (65) of the grooves (60) of the fiber-guide (6) for laying the fibers (2) into the grooves (11) of the ring (1).

10. Device according to any one of claims 1 to 9, characterized in that the first end of each fiber-guide (6) has a subjacent finger (63) matching the pofile of a groove (11) in the ring (1) and forming with the axis of the fiber-guide (6) an angle equal to half the apex angle (β) of the cone.

11. Device according to any one of claims 1 to 9, characterized in that the first end of each fiber-guide (6) has a subjacent finger (63) matching the profile of a groove (11) in the ring (1) and forming with the axis (X'X) of the ring (1) an angle such that the lateral surface of the finger is tangential to the helical surface of the groove.

12. Device according to any one of claims 6 to 9 and to claim 10 or 11, characterized in that the first end of each fiber-guide (6) has a subjacent chamfer (62) preceding the finger (63) and in rear of this one and standing proud of the ring (1) such that an end of the ring (60) of the fiber-guide (6) lies on the periphery of the ring (1).

13. Device according to any one of claims 1 to 12, characterized in that the rotating fiber-guide holder (3) is rigidly linked to means (SU) rotating about the ring (1) in terms of the pitch of the grooves (11) in the ring (1) and carrying fiber payout spools (BO) unwinding fibers (2) towards the fiber-guides (6).

**Patentansprüche**

1. Vorrichtung (DI) zum Verteilen optischer Fasern (2) in schraubenförmigen Nuten (11) einer Stange (1) bei Abspulen in Längsrichtung, aufweisend eine Trägereinrichtung (3), die sich um die Stange (1) drehend angebracht ist und geradlinige Kanäle (34) umfaßt, jeweils von einer in Längsrichtung ausgesparten, lang ausgebildeten Faserführung (6) zur Aufnahme wenigstens einer optischen Faser (2) durchquert, wobei die Faserführungen (6) folgend Erzeugenden eines Konus vorgesehen sind, der mit der Stange koaxial ist und erste Faseraustrittsenden (63), geeignet für das Eingreifen in die entsprechenden Nuten (11) der Stange (1) stromaufwärts der Trägereinrichtung (3) besitzt, dadurch gekennzeichnet, daß die Faserführungen (6) zum Verschieben in den Kanälen (34) angebracht sind und daß die Vorrichtung Mittel (5, 8, 9) aufweist, um die gleichzeitige Translationsbewegung der Gruppe der Faserführungen (6) entlang den Erzeugenden des Konus jeweils gemäß einer ausreichenden Amplitude zu bewirken, um die Gruppe der ersten Enden dieser Faserführungen in den entsprechenden Nuten der Stange in Eingriff zu bringen oder vollständig außer Eingriff aus diesen zu bringen.

2. Vorrichtung nach Anspruch 1, dadurch gekennzeichnet, daß die Mittel (5, 8, 9) zum Bewirken der gleichzeitigen Translationsbewegung der Gruppe der Faserführungen eine Scheibe (8), in einer ringförmigen Vertiefung (51, 90) angebracht, aufweisen, die im rückwärtigen Teil einer auf der Rückseite der sich drehenden Trägereinrichtung (3, 33) aufgeschraubten Mutter (5, 9) ausgespart ist, wobei die Scheibe (8) mit radialen Einschnitten (80) versehen ist, in denen sich zweite Enden in Form von Zapfen (66) der Faserführungen (6) jeweils verschieben derart, daß das Verschrauben oder Abschrauben der Mutter (8) die gleichzeitige entsprechende Translationsbewegung der Faserführungen (6) verursacht.

3. Vorrichtung nach Anspruch 2, dadurch gekennzeichnet, daß die Mutter (5, 9) durch einen gewindeversehenen Ring (5), der durch einen vorderen Teil um einen gewindeversehenen Abschnitt (33) der Trägereinrichtung (3) verschraubt ist, und durch eine gewindeversehene, hohle Scheibe (9) gebildet ist, die in einer gewindeversehenen Senkung (51) verschraubt ist, die in der Rückseite des Rings (5) ausgespart ist und die Scheibe (8) mit Spiel in der Rückseite des Rings (5) festhält.

4. Vorrichtung nach Anspruch 2 oder 3, dadurch gekennzeichnet, daß die Mutter (5, 9) auf der Trägereinrichtung (3) mittels einer Schraube (52) mit radialer oder analoger Sperrung verriegelt ist.

5. Vorrichtung nach einem beliebigen der Ansprüche 2 bis 4, dadurch gekennzeichnet, daß Markierungen unterhalb der Einschnitte (80) auf der Scheibe (8) oder auf einem kreisförmigen Etikett (81) markiert sind, das jeweils gegen die Scheibe befestigt ist.

6. Vorrichtung nach einem beliebigen der Ansprüche 1 bis 5, dadurch gekennzeichnet, daß jede Faserführung (6) eine längsgerichtete Nut (60) umfaßt, die vorzugsweise einen Querschnitt analog zu einem Querschnitt einer Nut (11) der Stange (1) besitzt und zur Entgegengesetzten der Stange offen ist, um wenigstens eine optische Faser (2) aufzunehmen.

7. Vorrichtung nach Anspruch 6, dadurch gekennzeichnet, daß der Querschnitt der Nuten (60) der Faserführungen (6) deutlich größer als der Querschnitt der optischen Fasern (2) ist.

8. Vorrichtung nach Anspruch 6 oder 7, dadurch gekennzeichnet, daß der Querschnitt der Nuten (60) der Faserführungen (6) V-förmig ist und in einem kreisförmigen Sektor von vorzugsweise ungefähr 45° enthalten ist.

9. Vorrichtung nach einem beliebigen der Ansprüche 6 bis 8, dadurch gekennzeichnet, daß sie in der Konvergenzzone der ersten Enden der Faserführungen ein Rotationselement (7) aufweist, das eine vorzugsweise kegelstumpfartige, durch die Stange (1) durchquerte Bohrung (70) besitzt und vorzugsweise abgeschrägte Vorderränder (65) der Nuten (60) der Faserführungen (6) überdeckt, um die Fasern (2) in die Nuten (11) der Stange (1) umzulegen.

10. Vorrichtung nach einem beliebigen der Ansprüche 1 bis 9, dadurch gekennzeichnet, daß das erste Ende einer jeden Faserführung (6) einen Unterfinger (63) umfaßt, der sich an das Profil einer Nut (11) der Stange (1) anschmiegt und mit der Achse der Faserführung (6) einen Winkel gleich dem halben spitzen Winkel (β) des Konus bildet.

11. Vorrichtung nach einem beliebigen der Ansprüche 1 bis 9, dadurch gekennzeichnet, daß das erste Ende einer jeden Faserführung (6) einen Unterfinger (63) umfaßt, der sich an das Profil einer Nut (11) der Stange (1) anschmiegt und mit der Achse (X'X) der Stange (1) einen Winkel bildet, so daß die Seitenfläche dieses Fingers tangential zur Schraubenfläche der Nut ist.

12. Vorrichtung nach einem der Ansprüche 6 bis 9 und nach dem Anspruch 10 oder 11, dadurch gekennzeichnet, daß das erste Ende einer jeden Faserführung (6) eine unten liegenden Abschrägung (62) umfaßt, vorhergehend dem Finger (63) und zurückspringend von diesem und überstehend über die Stange (1), damit ein Ende der Nut (60) der Faserführung (6) in der Peripherie der Stange (1) vorgesehen ist.

13. Vorrichtung nach einem beliebigen der Ansprüche 1 bis 12, dadurch gekennzeichnet, daß die sich drehende Faserführungsträgereinrichtung (3) starr mit Mitteln (SU) verbunden ist, die sich in Abhängigkeit vom Schrittabstand der Nuten (11) der Stange (1) um die Stange (1) drehen und Faserausgabespulen (BO) tragen, die Fasern (2) zu den Faserführungen (6) hin abwickeln.

FIG.1

CA

SU

1(FIG.2)

X'

MA

BO

2

DI(FIG.3)

TU

2

RU

X

EP 0 174 215 B1

FIG.2

1

11

12c

α

X'

X

10

12b

12a

FIG.3

# FIG.4

# FIG.5

# FIG.6

# FIG.10

FIG.7

6

62

64

63

FIG.8

EP 0 174 215 B1

60

B

A

65

β

β

β/2

62

B

11

64

63

ℓ

A

1

X

X'

FIG.9C

FIG.9B

FIG.9A

EP 0 174 215 B1

## FIG.11

## FIG.12

FIG.15

FIG.13

FIG.14

EP 0 174 215 B1